# EUROPÄISCHE PATENTANMELDUNG

(11) **EP 4 542 254 A1**
(43) Veröffentlichungstag der Anmeldung: **23.04.2025**
(21) Anmeldenummer: 23204008.9
(22) Anmeldetag: 17.10.2023
(51) Int. Cl.: G01S 7/484, G01S 17/10, G01S 7/497

(54) **OPTISCHER SENSOR**

(71) Anmelder: Leuze electronic GmbH + Co KG, 73277 Owen/Teck (DE)
(72) Erfinder: Karaduman, Metin, 73278 Schlierbach (DE); Schubert, Andreas, 73240 Wendlingen (DE); Doll, Manfred, 73230 Kirchheim (DE)
(74) Vertreter: Ruckh, Rainer Gerhard

(57) **Zusammenfassung**

Die Erfindung betrifft einen optischen Sensor mit einem Lichtimpulse emittierenden Sender (4), einem Lichtimpulse empfangenden Empfänger (5) und mit einer Auswerteeinheit (7), in welcher abhängig von Empfangssignalen des Empfängers (5) ein Objektfeststellungssignal generiert wird. Die Auswerteeinheit (7) weist einen Regelkreis (13), mittels dessen Pulsbreiten und/oder Pulsamplituden der vom Sender (4) emittierten Lichtimpulse geregelt werden, auf. Die Sendeleistung des Senders (4) bildet eine Ist-Größe des Regelkreises (13), wobei eine Ansteuerpulsbreite und/oder ein Ansteuerstrom für den Sender (4) Stellgrößen des Regelkreises (13) bilden.

## Beschreibung

Die Erfindung betrifft einen optischen Sensor.

Derartige optische Sensoren werden generell zur Erfassung von Objekten in einem Erfassungsbereich eingesetzt.

Derartige optische Sensoren umfassen generell wenigstens einen Lichtstrahlen emittierenden Sender und wenigstens einen Lichtstrahlen empfangenden Empfänger als Sensorkomponenten. Der Sender und der Empfänger sind vorteilhaft in einem Gehäuse integriert. Vom Sender emittierte Lichtstrahlen werden von einem Objekt zurück zum Empfänger reflektiert. Weiterhin umfasst der optische Sensor eine Auswerteeinheit, in welcher in Abhängigkeit von Empfangssignalen des Empfängers ein Objektfeststellungssignal generiert wird.

Derartige optische Sensoren können insbesondere als Distanzsensoren ausgebildet sein, bei welchen Distanzmessungen nach einem Impuls-Laufzeit-Verfahren durchgeführt werden.

Hierzu emittiert der Sender Lichtstrahlen in Form von Lichtimpulsen. Dabei ist der Sender von einer Laserlicht emittierenden Laserdiode gebildet. Zur Bestimmung der Distanz eines Objekts wird die Lichtlaufzeit der Lichtimpulse vom Sender zum Objekt und zurück zum Empfänger bestimmt.

Um hohe Messgenauigkeiten zu erhalten ist es wünschenswert, dass der Sender sehr kurze Lichtimpulse emittiert. Die Pulsbreite, d.h. die Dauer eines Lichtimpulses, sollte dabei vorteilhaft im Bereich einiger Hundert Pikosekunden liegen.

Mit derartig kurzen Lichtimpulsen werden insbesondere steile Anstiegsflanken der Lichtimpulse erhalten. Dies ist für einen geringen Schwarz-Weiß-Fehler bei Objektdetektionen vorteilhaft. Je nach Reflexionsgrad der Objekte werden bei den dort zurückreflektierenden Lichtimpulsen nicht nur unterschiedliche Amplituden, sondern auch unterschiedliche Signalformen der Lichtimpulse erhalten, was zu Verfälschungen der Distanzmessungen führen kann. Diese Fehlerquellen werden durch die Verwendung möglichst kurzer Lichtimpulse reduziert.

Ein weiterer Aspekt derartiger laserbasierter optischer Sensoren ist das Problem der Augensicherheit. Die normativen Regelungen betreffend der Augensicherheit definieren maximal Intensitäten und Einwirkzeiten von auf das menschliche Auge treffendem Laserlicht.

Auch hier ist es vorteilhaft, wenn der Sender des optischen Sensors möglichst kurze Lichtimpulse aussendet. Je kürzer die Pulsamplituden des Lichtimpuls, desto höher kann die Intensität, d.h. Pulsamplitude des Lichtimpuls sein, ohne dass die normativen Anforderungen bezüglich der Augensicherheit verletzt werden. Je höher die Pulsamplitude der Lichtimpulse, desto höher ist die Nachweisempfindlichkeit bei den Objektdetektionen.

Zur Erzeugung kurzer Lichtimpulse ist es bekannt, als Sender Laserdioden einzusetzen, denen ein Lasertreiber zugeordnet ist, der kurze Ansteuerpulse generiert.

Ein wesentlicher Nachteil besteht hierbei darin, dass diese Komponenten zur Erzeugung der Lichtimpulse nicht temperaturstabil sind, so dass die Generierung kurzer Lichtimpulse bei einem optischen Sensor, der wechselnden Temperatureinflüssen ausgesetzt ist, nicht reproduzierbar ist.

Der Erfindung liegt die Aufgabe zugrunde einen optischen Sensor der eingangs genannten Art bereitzustellen, der unempfindlich gegenüber äußeren Einflüssen ist und eine hohe Nachweisempfindlichkeit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor mit einem Lichtimpulse emittierenden Sender, einem Lichtimpulse empfangenden Empfänger und mit einer Auswerteeinheit, in welcher abhängig von Empfangssignalen des Empfängers ein Objektfeststellungssignal generiert wird. Die Auswerteeinheit weist einen Regelkreis, mittels dessen Pulsbreiten und/oder Pulsamplituden der vom Sender emittierten Lichtimpulse geregelt werden, auf. Die Sendeleistung des Senders bildet eine Ist-Größe des Regelkreises wobei eine Ansteuerpulsbreite und/oder ein Ansteuerstrom für den Sender Stellgrößen des Regelkreises bilden.

Mit dem erfindungsgemäßen optischen Sensor wird reproduzierbar und unempfindlich gegen äußere Einflüsse eine hohe Nachweisempfindlichkeit bei der Durchführung von Objektdetektionen erzielt.

Dies wird dadurch erreicht, dass der Sender Lichtimpulse emittiert, dessen Kenngrößen durch einen Regelkreis vorgegeben und stabilisiert sind.

Zu den Kenngrößen gehört sowohl die Pulsbreite, d.h. Pulsdauer eines Lichtimpulses, als auch dessen Pulsamplitude.

Dabei kann im einfachsten Fall nur die Pulsbreite eines Lichtimpulses geregelt werden, so dass mit der Regelung Lichtimpulse mit definierten Pulsbreiten realisiert werden.

Vorteilhaft liegen die Pulsbreiten im Pikosekundenbereich, insbesondere bei etwa Hundert Pikosekunden.

Die geregelte und damit stabile Erzeugung von Lichtimpulsen mit definierten Pulsbreiten gewährleistet eine hohe Nachweisempfindlichkeit.

Prinzipiell ist es auch möglich, nur die Pulsamplitude einzuregeln.

Besonders vorteilhaft werden mittels des Regelkreises sowohl die Pulsbreiten als auch Pulsamplituden der Lichtimpulse geregelt. Damit generiert der Sender Lichtimpulse mit definierter Pulsbreite und Pulsamplitude.

Die Stellgrößen der Regelkreise sind Ansteuerpulsbreiten und Ansteuerströme für den Sender, die vorteilhaft mittels einer geeigneten Ansteuerschaltung generiert werden.

Erfindungsgemäß bildet die Sendeleistung des Senders die Ist-Größe des Regelkreises, wobei diese mittels geeigneter Messmittel fortlaufend erfasst wird.

Die Sendeleistung ist eine Ist-Größe, die messtechnisch einfach, schnell und präzise erfasst werden kann. Dies stellt einen erheblichen Vorteil gegenüber einer direkten messtechnischen Erfassung der Pulsbreite und Pulsamplitude als Ist-Größen dar, da deren Erfassung einen erheblichen technischen Aufwand bedeuten würde, was wiederum zu unerwünscht hohen Herstellkosten des optischen Sensors führen würde.

Damit die Sendeleistung des Senders als Ist-Größe verwendet werden kann, ist die Abhängigkeit von Pulsbreite und Pulsamplitude der generierten Lichtimpulse von der Sendeleistung im optischen Sensor bekannt, d.h. in Form einer Kennlinie oder dergleichen hinterlegt. Dabei können auch temperaturabhängige Kennlinien im optischen Sensor hinterlegt sein, um so Temperatureinflüsse bei der Generierung von Lichtimpulsen zu berücksichtigen.

Besonders vorteilhaft wird in einem Vor-Abgleich für einen Soll-Lichtimpuls des Senders die Sendeleistung gemessen und als Führungsgröße des Regelkreises in der Auswerteeinheit abgespeichert.

Die Führungsgröße stellt einen Sollwert dar, auf welchen die Sendeleistung einzuregeln ist.

Zur Durchführung des Vorabgleichs kann ein optischer Detektor und ein Sampling-Oszilloskop mit großer Bandbreite verwendet werden, um einen Lichtimpuls des Senders zu signalisieren. Dabei wird der Lichtimpuls durch die Stellgrößen bildenden Ansteuerpulsbreiten und Ansteuerstrom des Senders eingestellt. Ist die Einstellung erfolgt, wird die Sendeleistung des Senders ermittelt und als Führungsgröße, d.h. Soll-Wert, für den Regelkreis in der Auswerteeinheit des optischen Sensors hinterlegt.

Gemäß einer vorteilhaften Ausführungsform bildet die in diesem vorhandenen Temperatur eine weitere Ist-Größe.

Hierzu ist vorteilhaft ein Temperatursensor vorhanden, mittels dessen die Temperatur im Innenraum des optischen Sensors bestimmt wird.

Durch die Berücksichtigung der Temperatur im optischen Sensor als Ist-Größe können Temperatureinflüsse in den Regelungsprozessen zur Vorgabe der Pulsbreite und/oder Pulsamplitude erfasst werden, so dass eine temperaturstabile Regelung dieser Kenngrößen gewährleistet ist.

Alternativ oder zusätzlich können Temperaturabhängigkeiten von Stellgrößen in einer Tabelle in der Auswerteeinheit hinterlegt sein.

Die Temperaturabhängigkeiten der Stellgrößen können in Abgleich-bzw. Einlernvorgängen ermittelt werden. Auch damit wird ein Beitrag für eine temperaturstabile Regelung der Pulsbreiten und/oder Pulsamplitude oder vom Sender generierte Lichtimpulse erhalten.

Gemäß einer vorteilhaften Weiterbildung werden im Regelkreis Störgrößen berücksichtigt.

Bei den Störgrößen handelt es sich um externe Einflussgrößen, wie z.B. Verschmutzungen des optischen Sensors oder Fremdlichteinflüsse.

Durch die Berücksichtigung der Störgrößen im Regelkreis wird eine erhöhte Störfestigkeit des optischen Sensors erhalten.

Gemäß einer vorteilhaften Ausführungsform ist der Sender eine Laserdiode.

Insbesondere ist der Sender eine VCSEL (vertical cavity surface emitting laser) - Diode.

Die Ist-Größe des Regelkreises des optischen Sensors bildet dann die Laserleistung, insbesondere die mittlere Laserleistung der Laserdiode.

Besonders vorteilhaft weist die Laserdiode eine Monitordiode auf, mit der die Sendeleistung bestimmt wird.

Alternativ kann eine separate, d.h. externe Diode zur Messung der Sendeleistung, d.h. Laserleistung, vorgesehen sein.

Bei einem Sender in Form einer Laserdiode ist vorteilhaft die Ansteuerschaltung ein Lasertreiber.

Gemäß einer vorteilhaften Ausführungsform ist der optische Sensor als Distanzsensor ausgebildet, mit dem Distanzen von Objekten bestimmt werden. Prinzipiell können die ermittelten Distanzwerte direkt als Objektfeststellungssignale ausgegeben werden. Alternativ kann auch eine Schwellwertbewertung der ermittelten Distanzwerte durchgeführt werden, so dass als Objektfeststellungssignal ein Schaltsignal ausgegeben werden kann, dessen Schaltzustände angeben, ob sich ein Objekt in einem bestimmten Distanzbereich aufhält oder nicht.

Vorteilhaft erfolgen die Distanzmessungen nach einem Impuls-Laufzeitverfahren.

Gemäß einer weiteren vorteilhaften Ausführungsform werden mit dem optischen Sensor Fluoreszenzmessungen durchgeführt, d.h. es werden fluoreszierende Objekte erfasst.

Die vom Sender emittierten Lichtimpulse weisen eine bestimmte Wellenlänge auf. Durch die Reflexion der Lichtimpulse an einem fluoreszierenden Objekt wird die Wellenlänge geändert. Der Empfänger des optischen Sensors ist ausgebildet, die Lichtimpulse mit der geänderten Wellenlänge zu erfassen.

Typische Anwendungsgebiete sind die Erfassung von fluoreszierenden Markierungen auf Objekten, wobei die fluoreszierenden Markierungen vom optischen Sensor erkannt werden können. Damit können insbesondere Objekte fälschungssicher markiert werden. Auch ist eine Unterscheidung von fluoreszierenden und nicht fluoreszierenden Objekten möglich.

Generell kann der optische Sensor als Sicherheitssensor ausgebildet sein, der in sicherheitstechnischen Applikationen eingesetzt werden kann. Hierzu weist der optische Sensor einen fehlersicheren Aufbau auf. Dies kann durch einen redundanten Aufbau der Auswerteeinheit, beispielsweise in Form von zwei sich zyklisch gegenseitig überwachenden Rechnereinheiten realisiert werden.

Die Erfindung wird im Folgenden anhand der Zeichnungen erläutert. Es zeigen:
- Figur 1:: Ausführungsbeispiel des erfindungsgemäßen optischen Sensors.
- Figur 2:: Lasertreiber für den optischen Sensor gemäß Figur 1.
- Figur 3:: Regelkreis für den optischen Sensor gemäß Figur 1.
- Figur 4:: Zeitlicher Verlauf von Lichtimpulsen des optischen Sensors für unterschiedliche Temperaturen.

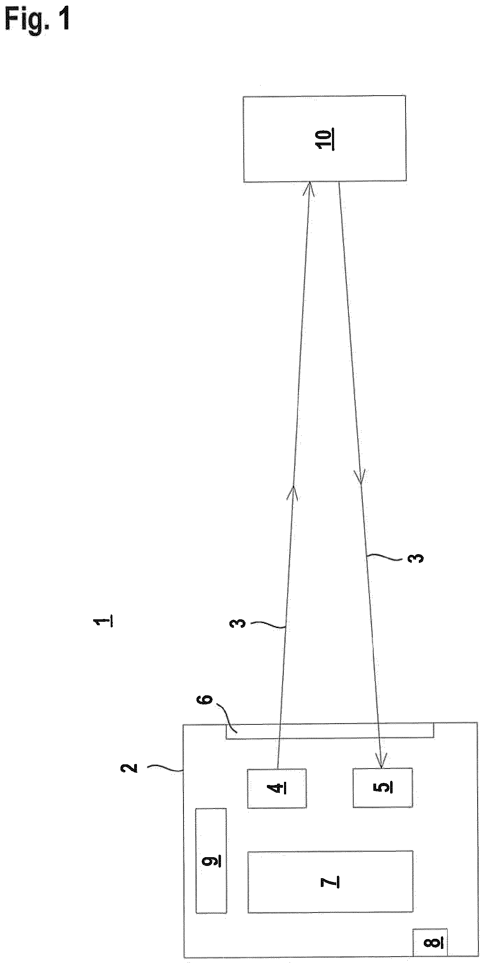

Figur 1 zeigt stark schematisiert ein Ausführungsbeispiel des erfindungsgemäßen optischen Sensors 1.

Der optische Sensor 1 weist ein Gehäuse 2 auf, in welchem alle Komponenten des optischen Sensors integriert sind. Der optische Sensor 1 weist einen Lichtstrahlen 3 emittierenden Sender 4 und einen Lichtstrahlen 3 empfangenden Empfänger 5 auf. Zur Strahlformung der Lichtstrahlen 3 kann dem Sender 4 eine nicht dargestellte Sendeoptik nachgeordnet sein. Zur Fokussierung der Lichtstrahlen 3 auf den Empfänger 5 kann dem Empfänger 5 eine ebenfalls nicht dargestellte Empfangsoptik vorgeordnet sein.

Zur Führung der Lichtstrahlen 3 aus dem Gehäuse 2 und in das Gehäuse 2 ist in diesem eine transparente Frontscheibe 6 integriert.

Weiterhin weist der optische Sensor 1 eine Auswerteeinheit 7 zur Auswertung von Empfangssignalen des Empfängers 5 auf. Abhängig von dieser Auswertung wird in der Auswerteeinheit 7 ein Objektfeststellungssignal generiert, das über einen Ausgang 8 ausgegeben wird.

Die Auswerteeinheit 7 ist im einfachsten Fall von einer Rechnereinheit, wie z.B. einem Mikroprozessor gebildet. Ist der optische Sensor 1 ein Sicherheitssensor, weist die Auswerteeinheit 7 einen redundanten Aufbau auf, beispielsweise in Form zweier sich gegenseitig zyklisch überwachender Rechnereinheiten.

Schließlich ist eine mit der Auswerteeinheit 7 verbundene Ansteuerschaltung 9 vorgesehen, die zur Ansteuerung des Senders 4 dient.

Zur Objektdetektion werden vom Sender 4 emittierte Lichtstrahlen 3 durch die Frontscheibe 6 in einen Erfassungsbereich geführt. Von einem dort vorhandenen Objekt 10 werden die Lichtstrahlen 3 zurück zum Empfänger 5 geführt.

Der Sender 4 des optischen Sensors emittiert Lichtstrahlen 3 in Form von Lichtimpulsen. Dabei ist der Sender 4 von einer Laserdiode, insbesondere einer VCSEL-Diode gebildet. Der Empfänger 5 kann von einer Photodiode, insbesondere einer Avalanche-Photodiode gebildet sein.

Der optische Sensor 1 kann beispielsweise zur Detektion fluoreszierender Objekte 10 ausgebildet sein. Im vorliegenden Fall ist der optische Sensor 1 ein Distanzsensor. Die Distanzmessungen erfolgen nach einem Impuls-Laufzeit-Verfahren. Dabei wird zur Distanzbestimmung die Lichtlaufzeit von Lichtimpulsen vom Sensor zu einem Objekt 10 und zurück zum Empfänger 5 ausgewertet. Die ermittelten Distanzwerte können direkt als Objektfeststellungssignale ausgegeben werden. Alternativ wird durch eine Schwellwertbewertung in der Auswerteeinheit 7 ermittelt, ob ein Objekt 10 in einem Distanzbereich ein Objekt 10 vorhanden ist oder nicht, wodurch als Objektfeststellungssignal ein binäres Schaltsignal generiert wird.

Der optische Sensor 1 gemäß Figur 1 emittiert Lichtstrahlen 3 in einer fest vorgegebenen Raumrichtung.

Der optische Sensor 1 kann generell auch als Scanner, insbesondere als Flächendistanzsensor ausgebildet sein. Die Lichtstrahlen 3 werden dann periodisch in einem flächigen Erfassungsbereich geführt. Hierzu kann dem Sender 4 eine Ablenkeinheit nachgeordnet sein. Alternativ können der Sender 4 und der Empfänger 5 Bestandteil eines rotierenden Messkopfs sein.

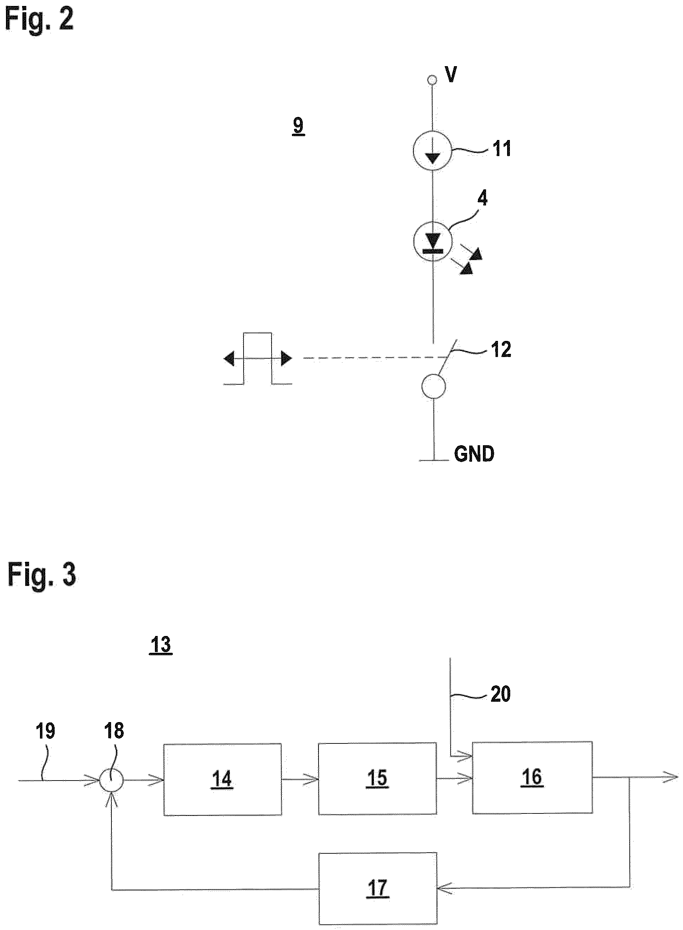

Angepasst an die Ausbildung des Senders 4 des optischen Sensors als Laserdiode ist die Ansteuerschaltung 9 in Form eines Lasertreibers ausgebildet, dessen Aufbau in Figur 2 schematisch dargestellt ist.

Der Lasertreiber weist eine auf einem Potential V liegende gesteuerte Stromquelle 11 und gegen Masse GND schaltbare Schaltmittel 12 auf, womit variable Ansteuerpulsbreiten für die zu generierenden Lichtimpulse generiert werden können, wie in Figur 2 schematisch dargestellt.

Erfindungsgemäß weist die Auswerteeinheit 7 des optischen Sensors einen Regelkreis 13 auf (dargestellt in Figur 3), mit dem stabilisierte, insbesondere temperaturstabilisierte kurze Lichtimpulse im Pikosekundenbereich erzeugt werden.

Der Regelkreis 13 weist in an sich bekannter Weise einen Regler 14, ein Stellglied 15 und eine Regelstrecke 16 auf.

Erfindungsgemäß wird als Ist-Größe des Regelkreises 13 die Sendeleistung, d.h. die mittlere Laserleistung der den Sender 4 bildenden Laserdiode mit Sensormitteln 17 fortlaufend erfasst. Im vorliegenden Fall sind die Sensormittel 17 von einer Monitordiode der Laserdiode gebildet. Generell kann hierzu auch eine separate Diode eingesetzt werden.

Die mit den Sensormitteln 17 bestimmten Ist-Werte werden in einem Vergleicher 18 mit einer über eine Eingangsleitung 19 zugeführten Führungsgröße, d.h. einem Soll-Wert für die Regelung verglichen.

Vorteilhaft wird in einem Vor-Abgleich für einen Soll-Lichtimpuls des Senders 4 die Sendeleistung gemessen und als Führungsgröße des Regelkreises 13 in der Auswerteeinheit 7 abgespeichert.

Weiter vorteilhaft kann die in dieser vorhandenen Temperatur eine weitere Ist-Größe bilden.

Dabei ist ein Temperatursensor vorhanden, mittels dessen die Temperatur im Innenraum des optischen Sensors bestimmt wird.

Der Vergleicher 18 liefert als Ausgangsgröße eine Regelabweichung, die dem Regler 14 zugeführt wird. Im Regler 14 wird eine Regelgröße generiert, die dem Stellglied 15 zugeführt wird.

Im Stellglied 15 werden Stellgrößen für die Regelstrecke 16 generiert. Im vorliegenden Fall sind die Stellgrößen eine Ansteuerpulsbreite und/oder ein Ansteuerstrom für den Lasertreiber, wodurch der Sender 4 geregelte und stabilisierte Lichtimpulse emittiert. Dabei können bei der Regelung die Pulsbreiten und/oder Pulsamplituden geregelt werden.

Vorteilhaft sind Temperaturabhängigkeiten von Stellgrößen in einer Tabelle in der Auswerteeinheit 7 hinterlegt.

Damit können Temperaturabhängigkeiten bei der Regelung systematisch erfasst werden, wodurch eine temperaturstabile Erzeugung von Lichtimpulsen gewährleistet ist.

Um eine erhöhte Störfestigkeit bei der Erzeugung der Lichtimpulse zu erhalten, werden über eine Leitung 20 der Regelstrecke 16 messtechnisch erfasste Störgrößen zugeführt.

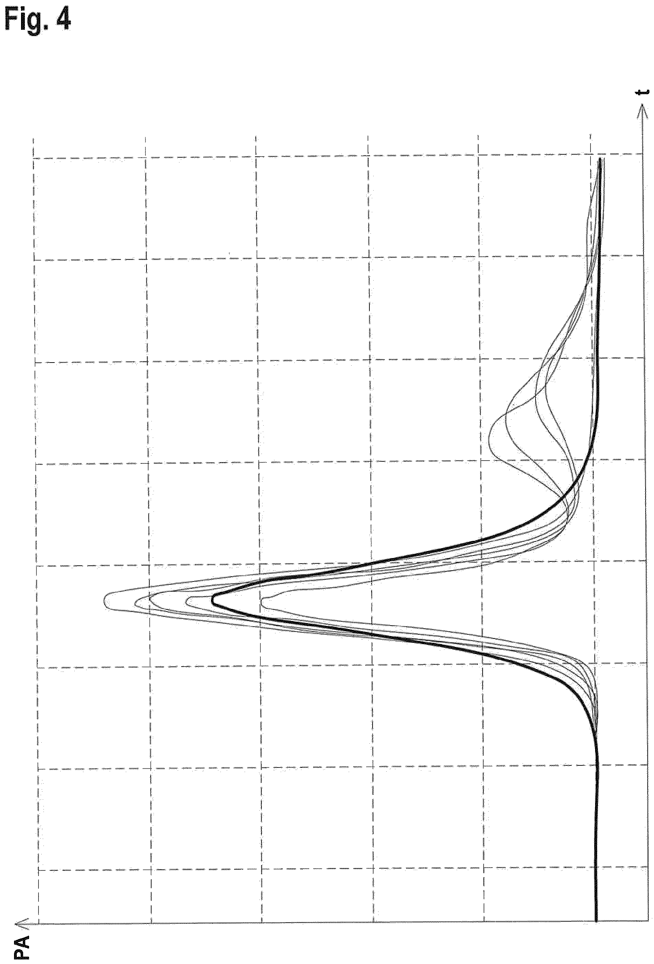

Figur 4 zeigt das Ergebnis der erfindungsgemäßen Regelung. Dort ist der zeitliche Verlauf der mit der erfindungsgemäßen Regelung, vom Sender 4 des optischen Sensors emittierten Lichtimpulse, aufgetragen. Dabei ist der zeitliche Verlauf eines Lichtimpuls für Temperaturen von -40°C bis 70°C aufgetragen. Wie aus Figur 4 ersichtlich, wird durch die erfindungsgemäße Regelung eine hohe Temperaturstabilität der Lichtimpulse erreicht.

### Bezugszeichenliste

- (1): Optischer Sensor
- (2): Gehäuse
- (3): Lichtstrahl
- (4): Sender
- (5): Empfänger
- (6): Frontscheibe
- (7): Auswerteeinheit
- (8): Ausgang
- (9): Ansteuerschaltung
- (10): Objekt
- (11): Stromquelle
- (12): Schaltmittel
- (13): Regelkreis
- (14): Regler
- (15): Stellglied
- (16): Regelstrecke
- (17): Sensormittel
- (18): Vergleicher
- (19): Eingangsleitung
- (20): Leitung

- (GND): Masse
- (V): Potential

## Patentansprüche

1. Optischer Sensor (1) mit einem Lichtimpulse emittierenden Sender (4), einem Lichtimpulse empfangenden Empfänger (5) und mit einer Auswerteeinheit (7), in welcher abhängig von Empfangssignalen des Empfängers (5) ein Objektfeststellungssignal generiert wird, **dadurch gekennzeichnet, dass** die Auswerteeinheit (7) einen Regelkreis (13), mittels dessen Pulsbreiten und/oder Pulsamplituden der vom Sender (4) emittierten Lichtimpulse geregelt werden, aufweist, wobei die Sendeleistung des Senders (4) eine Ist-Größe des Regelkreises (13) bildet und wobei eine Ansteuerpulsbreite und/oder ein Ansteuerstrom für den Sender (4) Stellgrößen des Regelkreises (13) bilden.

2. Optischer Sensor (1) nach Anspruch 1, **dadurch gekennzeichnet, dass** in einem Vor-Abgleich für einen Soll-Lichtimpuls des Senders (4) die Sendeleistung gemessen wird und als Führungsgröße des Regelkreises (13) in der Auswerteeinheit (7) abgespeichert wird.

3. Optischer Sensor (1) nach einem der Ansprüche 1 oder 2, **dadurch gekennzeichnet, dass** die in diesem vorhandene Temperatur eine weitere Ist-Größe bildet.

4. Optischer Sensor (1) nach einem der Ansprüche 1 bis 3, **dadurch gekennzeichnet, dass** Temperaturabhängigkeiten von Stellgrößen in einer Tabelle in der Auswerteeinheit (7) hinterlegt sind.

5. Optischer Sensor (1) nach einem der Ansprüche 3 oder 4, **dadurch gekennzeichnet, dass** ein Temperatursensor vorhanden ist, mittels dessen die Temperatur im Innenraum des optischen Sensors bestimmt wird.

6. Optischer Sensor (1) nach einem der Ansprüche 1 bis 5, **dadurch gekennzeichnet, dass** dem Sender (4) eine Ansteuerschaltung (9) zugeordnet ist, in welcher die Stellgrößen generiert werden.

7. Optischer Sensor (1) nach einem der Ansprüche 1 bis 6, **dadurch gekennzeichnet, dass** der Sender (4) eine Laserdiode ist.

8. Optischer Sensor (1) nach Anspruch 7, **dadurch gekennzeichnet, dass** der Sender (4) eine VCSEL (vertical cavity surface emitting laser) - Diode ist.

9. Optischer Sensor (1) nach einem der Ansprüche 7 oder 8, **dadurch gekennzeichnet, dass** die Laserdiode eine Monitordiode aufweist, mit der die Sendeleistung bestimmt wird, oder dass eine externe Monitordiode vorhanden ist, mit der die Sendeleistung der Laserdiode bestimmt wird.

10. Optischer Sensor (1) nach einem der Ansprüche 7 bis 9, **dadurch gekennzeichnet, dass** die Ansteuerschaltung (9) ein Lasertreiber ist.

11. Optischer Sensor (1) nach einem der Ansprüche 1 bis 10, **dadurch gekennzeichnet, dass** dieser ein Distanzsensor ist.

12. Optischer Sensor (1) nach einem der Ansprüche 1 bis 10, **dadurch gekennzeichnet, dass** mit diesem fluoreszierende Objekte (10) erfasst werden.

13. Optischer Sensor (1) nach einem der Ansprüche 1 bis 12, **dadurch gekennzeichnet, dass** im Regelkreis (13) Störgrößen berücksichtigt werden.

14. Optischer Sensor (1) nach einem der Ansprüche 1 bis 13, **dadurch gekennzeichnet, dass** die Pulsbreiten der Lichtimpulse im Pikosekundenbereich liegen.
